# EUROPÄISCHE PATENTSCHRIFT

(11) **EP 2 841 759 B1**
(45) Veröffentlichungstag und Bekanntmachung des Hinweises auf die Patenterteilung: **28.07.2021**
(21) Anmeldenummer: 13714581.9
(22) Anmeldetag: 22.03.2013
(51) Int. Cl.: F02M 61/14, F02M 61/16

(54) **HOCHDRUCKBRENNSTOFFEINSPRITZANLAGE**
HIGH PRESSURE FUEL INJECTION ARRANGEMENT
INSTALLATION D'INJECTION CARBURANT HAUTE PRESSION

(30) Priorität: 26.04.2012 DE 102012206887
(43) Veröffentlichungstag der Anmeldung: 04.03.2015
(73) Patentinhaber: Robert Bosch GmbH, 70442 Stuttgart (DE)
(72) Erfinder: POHLMANN, Jens, 74321 Bietigheim-Bissingen (DE); BOLZ, Thilo, 76703 Kraichtal (DE); FROIHOFER, Thomas, 74336 Brackenheim (DE); ITTLINGER, Ralph, 71287 Weissach (DE); GUENGOER, Goekhan, 71735 Eberdingen (DE)
(86) Internationale Anmeldenummer: PCT/EP2013/056165
(87) Internationale Veröffentlichungsnummer: WO 2013/160038

(56) Entgegenhaltungen:
- EP-A2- 0 102 164
- WO-A1-92/14051
- WO-A1-02/073025
- DE-A1- 2 617 565
- DE-A1-102006 038 841
- DE-U1- 9 216 362
- FR-A1- 2 637 021
- GB-A- 2 051 951
- JP-A- 2011 220 259

## Beschreibung

### Stand der Technik

Die Erfindung betrifft eine Hochdruckbrennstoffeinspritzanlage. Speziell betrifft die Erfindung das Gebiet der Brennstoffeinspritzanlagen für gemischverdichtende, fremdgezündete Brennkraftmaschinen, bei denen eine direkte Einspritzung des Brennstoffs in Brennräume der Brennkraftmaschine erfolgt.

Aus der DE 10 2005 020 380 A1 ist eine Brennstoffeinspritzvorrichtung bekannt, die sich durch eine schallentkoppelnde Bauweise auszeichnet. Hierbei umfasst die Brennstoffeinspritzvorrichtung wenigstens ein Brennstoffeinspritzventil, eine Aufnahme für das Brennstoffeinspritzventil in einem Zylinderkopf und eine Brennstoffverteilerleiste mit einem Anschlussstutzen, in den das Brennstoffeinspritzventil teilweise überlappend eingebracht ist. Um das Brennstoffeinspritzventil und die Brennstoffverteilerleitung radialkraftfrei voneinander zu beabstanden und das Brennstoffeinspritzventil sicher in der Aufnahmebohrung des Zylinderkopfes niederzuhalten, ist ein Niederhalter zwischen dem Brennstoffeinspritzventil und dem Anschlussstutzen vorgesehen. Der Niederhalter ist als bügelförmiges Bauteil ausgeführt. Mit einem Niederhalterbügel liegt der Niederhalter an einer stromabwärtigen Endfläche des Anschlussstutzens an der Brennstoffverteilerleiste im eingebauten Zustand an. Das Brennstoffeinspritzventil ist in einen Verbindungskörper eingehängt, der rohrförmig ausgeführt ist. An einer Gehäuseschulter wird das Brennstoffeinspritzventil von einem Haltekragen des Verbindungskörpers untergriffen, so dass das Brennstoffeinspritzventil gegenüber einer radial verlaufenden Schulter der Aufnahmebohrung beabstandet frei hängt.

Die aus der DE 10 2005 020 380 A1 bekannte Brennstoffeinspritzvorrichtung hat den Nachteil, dass die Anzahl und die Komplexität der Befestigungselemente groß sind und damit der Aufwand für eine Erstmontage in der Fertigung und eine Demontage sowie eine Wiedermontage im Servicefall ebenfalls groß ist.

Aus der GB 2 051 951 A ist bereits eine Anordnung als Brennstoffeinspritzanlage zur Niederdruckeinspritzung bei Brennkraftmaschinen bekannt. Die Anordnung umfasst einen Brennstoffverteiler und mehrere Brennstoffeinspritzventile, wobei jedes der Brennstoffeinspritzventile an einer Tasse des Brennstoffverteilers angeordnet ist und wobei zumindest eines der Brennstoffeinspritzventile durch ein Halteelement an der zugeordneten Tasse befestigt ist. Das Halteelement weist einen zumindest im Wesentlichen geraden ersten Schenkel und einen zumindest im Wesentlichen geraden zweiten Schenkel auf. In der Tasse sind zwei Aussparungen in Form von schlitzförmigen Einschnitten vorgesehen, die sich durch eine Wand der Tasse erstrecken, so dass der erste Schenkel und der zweite Schenkel zumindest teilweise durch die zwei Einschnitte geführt sind.

Aus der WO 02/073025 A1 sind bereits Verbindungsanordnungen für Druckregelventile und Einspritzventile an einer Kraftstoffverteilerleitung bekannt. Die Verbindung für das Druckregelventil sieht zwei koaxial hintereinander angeordnete Elemente der Kraftstoffversorgungsanlage der Brennkraftmaschine vor, wobei das erste Element eine Aufnahmebuchse mit einer Führungsöffnung ist und das zweite Element das Druckregelventil mit einem Führungsabschnitt, der in die Führungsöffnung der Aufnahmebuchse einsetzbar ist. Die Aufnahmebuchse hat einander gegenüberliegend in einer Wandung zwei zueinander und zu einer Haltenut im Druckregelventil fluchtende Halteöffnungen, die von einer U-förmigen Halteklammer mit ihren Schenkeln durchragt werden, wodurch die Lage der Aufnahmebuchse und des Druckregelventils zueinander fixiert werden. Im Gegensatz dazu wird das Einspritzventil mit einer Sicherungsklemme in Form eines klassischen Befestigungsclips mit Verdrehfixierung an der Kraftstoffverteilerleitung befestigt.

Aus der EP 0 102 164 A2 ist bereits ein zweischenkliger Befestigungsclip für Einspritzventile bekannt. Dieser Befestigungsclip ist als Stanz-Biege-Teil aus einem dünnen Blech gefertigt und sichert das Einspritzventil in der Aufnahmeöffnung einer Kraftstoffverteilerleitung, indem der Befestigungsclip in einen in der Kraftstoffverteilerleitung vorgesehenen Schlitz eingreift und das Einspritzventil an seinem Zulaufstutzen umgreift.

Aus der FR 2 637 021 A ist wiederum eine Befestigungslösung mit einem Drahtclip für ein Druckregelventil bekannt. Ähnlich wie bei der aus der WO 02/073025 A1 bekannten Halteklammer ist auch hier die Befestigungsklammer U-förmig ausgeformt, wobei die beiden Schenkel der Klammer jeweils gerundete Teilabschnitte aufweisen, um das Druckregelventil in gewisser Weise formschlüssig umgreifen zu können. Anstelle von Schlitzen in der Aufnahmebuchse sind jeweils zwei gegenüberliegende Durchgangsbohrungen für jeden Schenkel der Klammer in der Wandung der Aufnahmebuchse vorgesehen.

Die aus der WO 92/14051 A bekannte Halteklammer ist ebenfalls zur Befestigung eines Druckregelventils an einer Kraftstoffverteilerleitung vorgesehen. Die Halteklammer zeichnet sich dadurch aus, dass sie einerseits mit zwei Schenkeln in Form von flachen gebogenen Blechstreifen das Druckregelventil umfangsmäßig umgreift und andererseits mit zwei flachen Blechstreifen, die in der Ausrichtung zu den gebogenen Blechstreifen im rechten Winkel verlaufen, in Schlitze der Aufnahmebuchse eingreift.

### Offenbarung der Erfindung

Die erfindungsgemäße Hochdruckbrennstoffeinspritzanlage mit den Merkmalen des Anspruchs 1 hat den Vorteil, dass eine verbesserte Ausgestaltung ermöglicht ist. Speziell ergibt sich der Vorteil, dass die Anzahl und die Komplexität der Befestigungselemente reduziert werden kann und damit der Aufwand für die Erstmontage in der Fertigung sowie einer mögliche Demontage sowie Wiedermontage im Servicefall eingeschränkt wird. Speziell kann die Anzahl und die Komplexität der Befestigungselemente auf ein Minimum reduziert werden. Ein weiterer möglicher Vorteil besteht darin, dass die Befestigung mit dem erfindungsgemäß ausgeformten Halteelement ein Schwenken des jeweiligen Brennstoffeinspritzventils innerhalb gewisser Grenzen zulässt, sofern insbesondere die Geometrie des Brennstoffeinspritzventils und die Geometrie der Tasse geeignet vorgegeben sind. Hierdurch wird ein radialer Toleranzausgleich zwischen der Tasse am Brennstoffverteiler und beispielsweise einer Ventilbohrung im Zylinderkopf ermöglicht.

Durch die in den Unteransprüchen aufgeführten Maßnahmen sind vorteilhafte Weiterbildungen der im Anspruch 1 angegebenen
Hochdruckbrennstoffeinspritzanlage möglich.

Speziell eignet sich die Anordnung für Brennkraftmaschinen zur Benzindirekteinspritzung. Der Brennstoffverteiler kann hierbei insbesondere als Brennstoffverteilerleiste ausgestaltet sein. Der Brennstoffverteiler dient zum Speichern von unter hohem Druck stehenden Brennstoff und zur Verteilung des Brennstoffs auf die Brennstoffeinspritzventile. Die Brennstoffeinspritzventile können hierbei insbesondere als Hochdruckeinspritzventile ausgestaltet sein. Die Brennstoffeinspritzventile spritzen den zum Verbrennungsvorgang notwendigen Brennstoff unter hohem Druck in den jeweiligen Verbrennungsraum ein. Der Brennstoff wird hierbei über eine Hochdruckpumpe verdichtet und mengengesteuert über eine Hochdruckleitung in den Brennstoffverteiler gefördert.

Die Anordnung ist als Brennstoffeinspritzanlage ausgestaltet. Hierbei kann der Brennstoffverteiler auf geeignete Weise mit einer Anbaustruktur, insbesondere einem Zylinderkopf einer Brennkraftmaschine, verbunden werden. Der Brennstoffverteiler kann mehrstückig ausgestaltet sein und beispielsweise ein Hauptrohr, Halter, die Tassen (Ventiltassen) für die Aufnahme der Brennstoffeinspritzventile, einen Anschluss für den Drucksensor und einen Kundenanschluss aufweisen. Hierbei können die einzelnen Teile und gegebenenfalls vorgesehene Anbauteile direkt mit dem Hauptrohr verlötet werden. Diese komplette Baugruppe kann beispielsweise über die Halter direkt am

Zylinderkopf hart verschraubt werden. Es sind aber auch andere Befestigungslösungen möglich.

Denkbar ist es, dass die Brennstoffeinspritzventile, die in den Tassen des Brennstofffverteilers montiert sind, auf Grund der Kraft, die durch den Innendruck des Brennstoffs und gegebenenfalls geeignete Niederhalterelemente erzeugt wird, gegen einen axialen Anschlag am Zylinderkopf gedrückt werden, wenn die Brennstoffeinspritzventile in entsprechenden Bohrungen des Zylinderkopfes stecken. Dies hat allerdings den Nachteil, dass sich ein metallischer Kontakt zwischen der Auflagefläche des Brennstoffeinspritzventils am Zylinderkopf ergibt. Dies bedingt eine direkte Übertragung der vom Brennstoffeinspritzventil verursachten Geräusche in die Fahrzeugstruktur. Durch die Abstützung des Bundes des Brennstoffeinspritzventils an den Schenkeln des Halteelements wird die Abstützung am Zylinderkopf aufgehoben. Hierdurch wird auch der metallische Kontakt aufgehoben und die direkte Übertragung von Geräuschen wird reduziert.

Somit kommt es zu einer Reduzierung der akustischen Pfade zwischen beispielsweise einem Zylinderkopf, dem Brennstoffverteiler und den Brennstoffeinspritzventilen, die eine Übertragung von Körperschall ermöglichen. Speziell kann die Quelle der Schallanregung mechanisch von dem Zylinderkopf oder dergleichen getrennt werden.

Das Halteelement ermöglicht somit eine axiale mechanische Trennung der Brennstoffeinspritzventile vom Zylinderkopf oder dergleichen, da eine direkte Befestigung der Brennstoffeinspritzventile an die Tassen ermöglicht ist. Hierbei ist die Anzahl und die Komplexität der Befestigungselemente auf ein Minimum reduzierbar.

Erfindungsgemäß liegen der erste Schenkel und der zweite Schenkel zumindest näherungsweise in einer Ebene, die senkrecht zu einer Längsachse der Tasse des Brennstoffeinspritzventils ist. Dadurch werden die insbesondere durch den Innendruck des Brennstoffs entstehenden Kräfte, die in axialer Richtung auf das Halteelement einwirken, vorteilhaft von den Schenkeln des Halteelements aufgenommen. Eine Kraftkomponente auf das Halteelement, die senkrecht zu der Längsachse ist, wird hierdurch vermieden.

Erfindungsgemäß sind der erste Schenkel und der zweite Schenkel des Haltelements in einem Ausgangszustand nicht parallel zueinander orientiert. In vorteilhafter Weise sind der erste Schenkel und der zweite Schenkel des Haltelements zum Verklemmen des Halteelements in der zumindest einen Aussparung gegeneinander verschwenkt. Erfindungsgemäß wird bei einer Ausgestaltung des Halteelements, bei der die Schenkel im Ausgangszustand nicht parallel zueinander orientiert sind, durch die Parallelstellung der Schenkel und das Einfügen in die zumindest eine Aussparung eine Klemmkraft erzeugt. Diese Klemmkraft fixiert das Halteelement dann zuverlässig an der Tasse. Erfindungsgemäß ist an dem ersten Schenkel des Halteelements eine Anlagefläche ausgestaltet, an der der Bund der Anschlusshülse des Brennstoffeinspritzventils an dem ersten Schenkel anliegt. Ferner ist an dem zweiten Schenkel des Halteelements eine Anlagefläche ausgestaltet, an der der Bund der Anschlusshülse des Brennstoffeinspritzventils an dem zweiten Schenkel anliegt. Durch die Ausgestaltung der Anlageflächen an den Schenkeln des Halteelements kann die Auflagefläche zwischen dem Bund des Brennstoffeinspritzventils und dem Halteelement vergrößert werden. Somit ergibt sich eine größere Belastbarkeit und somit Eignung der Anlage für höhere Betriebsdrücke. Außerdem kann hierdurch ein Formschluss erzielt werden.

Vorteilhaft ist es nämlich auch, dass zwischen dem ersten Schenkel des Halteelements und dem Bund der Anschlusshülse des Brennstoffeinspritzventils ein Formschluss gebildet ist, der das Halteelement relativ zu der Tasse fixiert, und/oder dass zwischen dem zweiten Schenkel des Halteelements und dem Bund der Anschlusshülse des Brennstoffeinspritzventils ein Formschluss gebildet ist, der das Halteelement relativ zu der Tasse fixiert. Der Formschluss kann hierbei zusätzlich oder alternativ zu einer Klemmwirkung vorgesehen sein. Durch den Formschluss wird das Halteelement über die Lebensdauer gegen ein Herausfallen gesichert. Der Formschluss kann beispielsweise durch eine geeignete Ausgestaltung der Anlagefläche an dem ersten Schenkel beziehungsweise der Anlagefläche an dem zweiten Schenkel bewirkt werden. Speziell kann die Anlagefläche des ersten Schenkels durch eine Anprägung ausgebildet sein und die Anlagefläche des zweiten Schenkels kann durch eine weitere Anprägung ausgebildet sein.

Außerdem ist es vorteilhaft, dass der erste Schenkel des Halteelements ein zumindest näherungsweise rechteckiges Profil aufweist und/oder dass der zweite Schenkel des Halteelements ein zumindest näherungsweise rechteckiges Profil aufweist. Speziell kann das gesamte Halteelement zumindest näherungsweise ein rechteckiges Profil aufweisen. Das rechteckige Profil kann beispielsweise durch geeignete Anprägungen stellenweise abgewandelt werden.

Vorteilhaft ist es auch, dass der erste Schenkel im Bereich des Brennstoffeinspritzventils einen bezüglich einer Längsachse der Tasse beziehungsweise der Anschlusshülse des Brennstoffeinspritzventils radial nach außen gebogenen Fixierabschnitt aufweist und/oder dass der zweite Schenkel im Bereich des Brennstoffeinspritzventils einen bezüglich der Längsachse der Tasse beziehungsweise der Anschlusshülse des Brennstoffeinspritzventils radial nach außen gebogenen Fixierabschnitt aufweist. Speziell kann die Anschlusshülse des Brennstoffeinspritzventils in vorteilhafter Weise eine zumindest teilweise zylindermantelförmige Kontaktfläche aufweisen, wobei der Fixierabschnitt des ersten Schenkels und der Fixierabschnitt des zweiten Schenkels an der Kontaktfläche der Anschlusshülse des Brennstoffeinspritzventils anliegen kann. Hierdurch kann ein Formschluss zwischen dem Halteelement und der Anschlusshülse des Brennstoffeinspritzventil gebildet werden, der das Halteelement gegen Herausfallen sichert.

Vorteilhaft ist es ferner, dass das Halteelement einen Bügel aufweist, der den ersten Schenkel mit dem zweiten Schenkel verbindet und dass an dem Bügel ein Anschlag ausgebildet ist, der an einer Außenseite der Tasse anschlägt. Hierdurch ist im Rahmen der Montage eine definierte Endposition des Halteelements an der Tasse vorgegeben. Somit ist eine korrekte Einbauposition sichergestellt. Beispielsweise kann der Anschlag des Bügels durch einen umgebogenen Teil des Bügels gebildet sein. Dies macht eine kostengünstige Ausgestaltung des Halteelements möglich. Möglich ist es allerdings auch, dass der Anschlag des Bügels durch ein mit dem Bügel verbundenes Anschlagteil gebildet ist. Speziell kann solch ein Anschlagteil durch eine Kunststoffanspritzung, die an den Bügel angespritzt ist, realisiert sein. Hierdurch kann ebenfalls ein Anschlag an dem Bügel realisiert werden.

Um die Montage des Halteelements an der Tasse zu vereinfachen, können die beiden zumindest im wesentlichen geraden Schenkel des Halteelements auch unterschiedlich lang ausgestaltet werden. Hierdurch ist ein ungleiches Einführen in die zumindest eine Aussparung möglich, wodurch sich die Montage verbessert. Speziell können zwei Aussparungen in der Tasse vorgesehen sein, die vorzugsweise durch Durchgangsbohrungen ausgebildet sind. Jeder der Schenkel des Halteelements kann dann durch eine der Aussparungen geführt werden. Die Ausgestaltung des Halteelements mit ungleichen Schenkellängen ermöglicht dann ein ungleiches Einführen in die Durchgangsbohrungen.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 eine Anordnung mit einer Tasse eines Brennstoffverteilers und einem Brennstoffeinspritzventil in einer auszugsweisen, schematischen, räumlichen Darstellung entsprechend einem ersten Ausführungsbeispiel der Erfindung;
Fig. 2 ein Halteelement der in Fig. 1 dargestellten Anordnung in einer schematischen, räumlichen Darstellung entsprechend dem ersten Ausführungsbeispiel der Erfindung;
Fig. 3 die Anschlusshülse eines Brennstoffeinspritzventils der in Fig. 1 dargestellten Anordnung in einer auszugsweisen, schematischen, räumlichen Darstellung entsprechend dem ersten Ausführungsbeispiel der Erfindung;
Fig. 4 das in Fig. 2 dargestellte Halteelement einer Anordnung in einer schematischen, räumlichen Darstellung entsprechend einem zweiten Ausführungsbeispiel der Erfindung;
Fig. 5 das in Fig. 2 dargestellte Halteelement einer Anordnung in einer schematischen, räumlichen Darstellung entsprechend einem dritten Ausführungsbeispiel der Erfindung;
Fig. 6 die in Fig. 1 dargestellte Anordnung in einer auszugsweisen, schematischen, räumlichen Darstellung entsprechend einem alternativen Beispiel (nicht Teil der Erfindung) und
Fig. 7 ein Halteelement der in Fig. 6 dargestellten Anordnung in einer schematischen, räumlichen Darstellung entsprechend dem alternativen Beispiel.

### Ausführungsformen der Erfindung

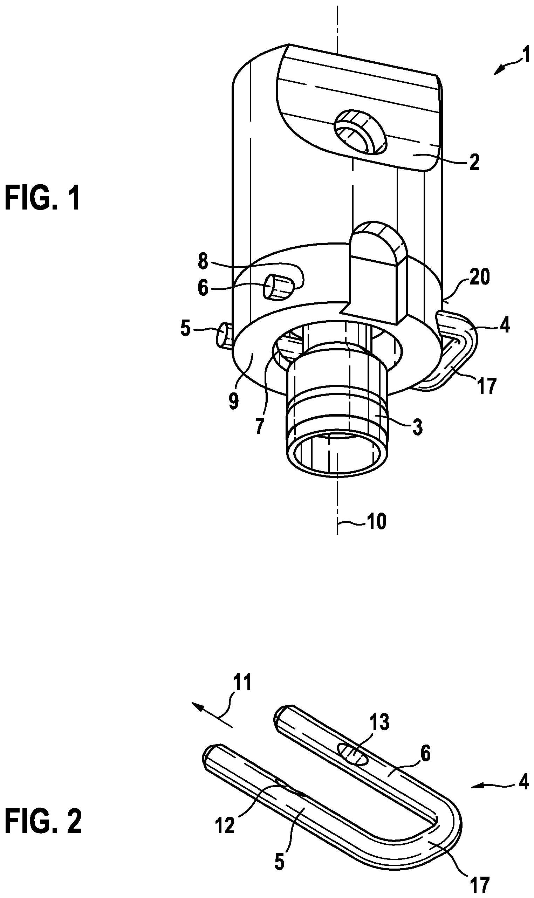

Fig. 1 zeigt eine Anordnung 1 mit einer Tasse 2 und eine Anschlusshülse 3 eines Brennstoffeinspritzventils in einer auszugsweisen, schematischen, räumlichen Darstellung entsprechend einem ersten Ausführungsbeispiel. Die Anordnung 1 weist mehrere solche Tassen 2 auf, die über einen vorzugsweise länglichen, rohrförmigen Grundkörper miteinander verbunden sind. Hierdurch ist ein Brennstoffverteiler gebildet, der als Brennstoffverteilerleiste ausgestaltet ist. An den Tassen 2 des Brennstoffverteilers sind die Brennstoffeinspritzventile angeordnet. Die Anordnung 1 ist als Brennstoffeinspritzanlage zur Hochdruckeinspritzung bei Brennkraftmaschinen ausgestaltet. Hierbei kann dem Brennstoffverteiler über eine Hochdruckpumpe unter hohem Druck stehender Brennstoff zugeführt werden.

Das auszugsweise dargestellte Anschlusshülse 3 eines Brennstoffeinspritzventils ist über ein Halteelement 4 mit der Tasse 2 verbunden. Hierbei weist das Halteelement 4 zumindest im Wesentlichen gerade Schenkel 5, 6 auf, die durch zumindest eine Aussparung 7, 8 in einer Wand 9 der Tasse 2 geführt sind. In diesem Ausführungsbeispiel sind zwei Aussparungen 7, 8 vorgesehen, die durch Durchgangsbohrungen ausgestaltet sind. Die Aussparungen 7, 8 liegen dabei zumindest näherungsweise in einer Ebene, die senkrecht zu einer Achse 10 der Tasse 2 orientiert ist.

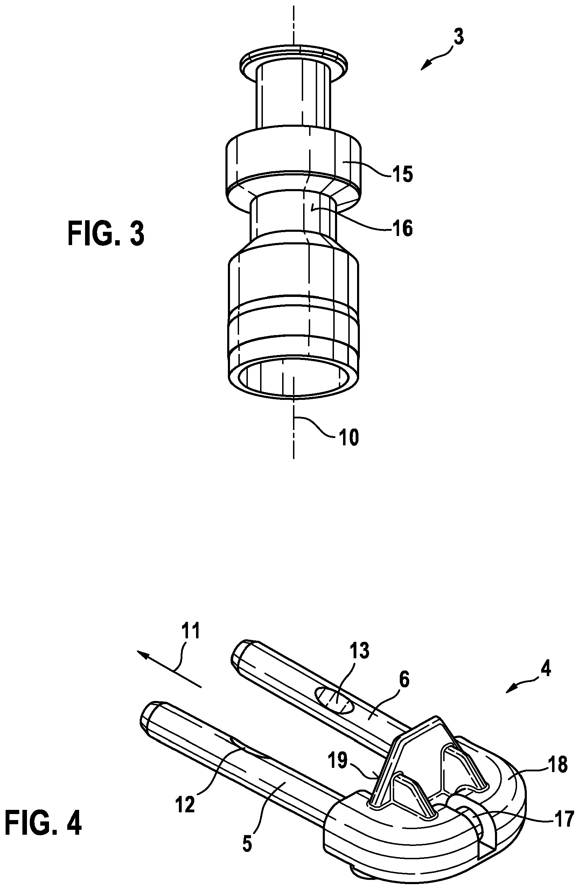

Die Ausgestaltung der Anordnung 1 des ersten Ausführungsbeispiels ist im Folgenden auch unter Bezugnahme auf die Fig. 2 und 3 weiter beschrieben.

Fig. 2 zeigt das Halteelement 4 der in Fig. 1 dargestellten Anordnung 1 in einer schematischen, räumlichen Darstellung entsprechend dem ersten Ausführungsbeispiel. Der erste Schenkel 5 und der zweite Schenkel 6 des Halteelements 4 sind in einem Ausgangszustand erfindungsgemäß nicht parallel zueinander orientiert. Bezüglich einer Fügerichtung 11, in der die Schenkel 5, 6 des Halteelements 4 durch die Aussparungen 7, 8 bei der Montage geführt werden, laufen erfindungsgemäß die Schenkel 5, 6 entweder aufeinander zu oder etwas auseinander, so dass sich keine exakt parallele Ausgestaltung ergibt. Durch ein entsprechendes Aufspreizen beziehungsweise Zusammendrücken der Schenkel 5, 6 wird dann ein Einfügen in die parallel zueinander ausgestalteten Durchgangsbohrungen 7, 8 ermöglicht. Im montierten Zustand, wie er in der Fig. 1 dargestellt ist, ergibt sich hierdurch eine Klemmkraft. Dadurch wird das Halteelement 4 gegenüber dem Herausfallen aus der Tasse 2 gesichert.

Außerdem ist in diesem Ausführungsbeispiel an dem Schenkel 5 eine Anprägung 12 vorgesehen. Ferner ist an dem Schenkel 6 eine Anprägung 13 vorgesehen. Durch die Anprägungen 12, 13 sind Anlageflächen 12, 13 an den Schenkeln 5, 6 des Halteelements 4 ausgestaltet.

Fig. 3 zeigt die Anschlusshülse 3 eines Brennstoffeinspritzventils der in Fig. 1 dargestellten Anordnung 1 in einer auszugsweisen, schematischen, räumlichen Darstellung entsprechend dem ersten Ausführungsbeispiel. Die Anschlusshülse 3 weist einen Bund 15 auf. Der Bund 15 der Anschlusshülse 3 liegt an den Anlageflächen 12, 13 der Schenkel 5, 6 des Haltelements 4 an. Hierdurch ist ein Formschluss zwischen dem Bund 15 der Anschlusshülse 3 des Brennstoffeinspritzventils und den Schenkeln 5, 6 des Halteelements 4 gebildet. Durch diesen Formschluss wird das Halteelement 4 in der Tasse 2 gehalten und somit gegenüber Herausfallen gesichert.

Somit sind bei diesem Ausführungsbeispiel zwei Sicherungsmechanismen vorgesehen, die ein Herausfallen des Haltelements 4 aus der Tasse 2 verhindern. Zum einen wird ein

Kraftschluss über die nicht parallelen Schenkel 5, 6 des Halteelements 4 bezüglich der Tasse gebildet. Zum anderen wird ein Formschluss über die Anlageflächen 12, 13 zwischen dem Halteelement 4 und der Tasse 2 gebildet. Je nach Anwendungsfall kann auch nur eine dieser beiden Sicherungsmethoden realisiert sein.

Die Anlageflächen 12, 13 sind in diesem Ausführungsbeispiel durch Anprägungen 12, 13 ausgestaltet. Es sind aber auch andere Ausgestaltungen möglich. Ferner kann der Formschluss zwischen dem Bund des Brennstoffeinspritzventils 3 und zumindest einem der Schenkel 5, 6 des Halteelements 4, der das Halteelement 4 relativ zu der Tasse 2 fixiert, auch auf andere Weise als durch Anlageflächen 12, 13 an dem Schenkel 5, 6 realisiert werden.

Ferner wird der Kraftschluss zum Verklemmen des Halteelements 4 relativ zu der Tasse 2 in diesem Ausführungsbeispiel durch Verschwenken der Schenkel 5, 6 in der zumindest einen Aussparung 7, 8 erzielt.

Der Bund 15 der Anschlusshülse 3 des Brennstoffeinspritzventils ist somit an den Schenkeln 5, 6 des Halteelements 4 abgestützt. Hierdurch ist ein Herausziehen des Brennstoffeinspritzventils aus der Tasse 2 entlang der Achse 10 verhindert. Somit ist eine zuverlässige Befestigung gewährleistet, die auch ein gewisses Spiel des Brennstoffeinspritzventils gegenüber der Tasse 2 ermöglicht. Insbesondere kann durch eine konstruktive Ausgestaltung eine Aufhängung erzielt werden, die ein Verschwenken des Brennstoffeinspritzventils relativ zu der Tasse 2 innerhalb gewisser Grenzen ermöglicht.

In diesem Ausführungsbeispiel ist die Halteklammer 4 U-förmig ausgestaltet. Hierdurch ist eine kostengünstige Herstellung möglich. Ferner ergibt sich ein geringer Platzbedarf und ein optimierter Materialeinsatz. Das Halteelement 4 kann insbesondere aus einem entsprechend dicken Metalldraht, der entsprechend gebogen und geprägt wird, hergestellt sein.

Die Anlageflächen 12, 13 ermöglichen außerdem eine reduzierte Flächenpressung im Bereich des Kontaktes zwischen dem Bund 15 der Anschlusshülse 3 und dem Halteelement 4. Hierdurch verringert sich die Materialbelastung. Ein vorzugsweise geringfügiges Schwenken des Brennstoffeinspritzventils in der Tasse 2 kann durch eine geeignete Ausgestaltung der Anlageflächen 12, 13 und/oder durch eine geeignete Ausgestaltung des Bundes 15 erzielt beziehungsweise unterstützt werden. Geringe Abstände der Abstützpunkte der Schenkel 5, 6 des Halteelements 4 in der Tasse 2 und den Anlageflächen 12, 13 für die Anschlusshülse 3 ermöglichen außerdem eine Reduzierung des Querschnitts des Halteelements 4, insbesondere den Einsatz geringer Drahtstärken.

Die Anschlusshülse 3 des Brennstoffeinspritzventils weist eine zylindermantelförmige Außenseite 16 auf, an der ein Außendurchmesser der Anschlusshülse 3 kleiner ist als an dem Bund 5. Die Schenkel 5, 6 haben einen geringen radialen Abstand zur zylindermantelförmigen Außenseite 16 der Anschlusshülse 3 des Brennstoffeinspritzventils.

Fig. 4 zeigt das in Fig. 2 dargestellte Halteelement 4 einer Anordnung 1 in einer schematischen, räumlichen Darstellung entsprechend einem zweiten Ausführungsbeispiel. In diesem Ausführungsbeispiel ist an einem Bügel 17 des Halteelements 4, der die Schenkel 5, 6 miteinander verbindet, ein mit dem Bügel 17 verbundenes Anschlagteil 18 vorgesehen. Das Anschlagteil 18 kann beispielsweise durch eine zumindest teilweise Umspritzung des Bügels 17 ausgestaltet sein. Das Anschlagteil 18 bildet einen Anschlag 19, der bei der Montage an einer Außenseite 20 der Tasse 2 anschlägt. Hierdurch wird eine korrekte Einbauposition sichergestellt.

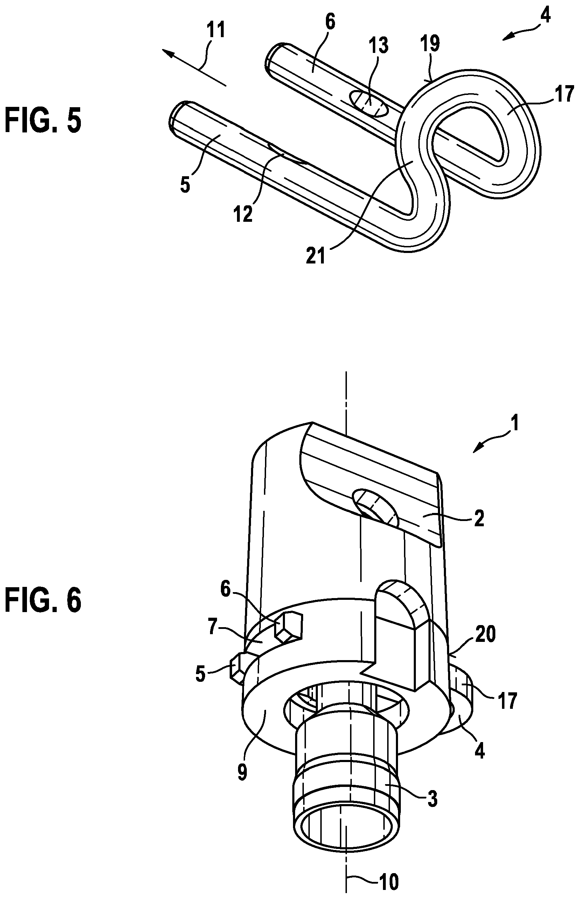

Fig. 5 zeigt das in Fig. 2 dargestellte Halteelement 4 einer Anordnung 1 in einer schematischen, räumlichen Darstellung entsprechend einem dritten Ausführungsbeispiel. In diesem Ausführungsbeispiel weist der Bügel 17 einen umgebogenen Teil 21 auf, der den Anschlag 19 bildet. Hierdurch ist eine korrekte Einbauposition des Halteelements 4 sichergestellt.

Fig. 6 zeigt die in Fig. 1 dargestellte Anordnung 1 mit einer Tasse 2 und einer Anschlusshülse 3 eines Brennstoffeinspritzventils in einer auszugsweisen, schematischen, räumlichen Darstellung entsprechend einem alternativen Beispiel (nicht Teil der Erfindung). In diesem alternativen Beispiel ist eine Ausnehmung 7 in der Wand 9 vorgesehen, durch die sich die beiden Schenkel 5, 6 des Halteelements 4 erstrecken. Ferner weist das Halteelement 4 in diesem alternativen Beispiel ein zumindest näherungsweise rechteckiges Profil auf. Insbesondere weisen die beiden Schenkel 5, 6 des Halteelements 4 ein zumindest näherungsweise rechteckiges Profil auf. Hierbei weist in diesem alternativen Beispiel auch der Bügel 17 des Halteelements 4 ein rechteckiges Profil auf. Das Halteelement 4 ist in diesem alternativen Beispiel als U-förmiges Halteelement 4 ausgestaltet.

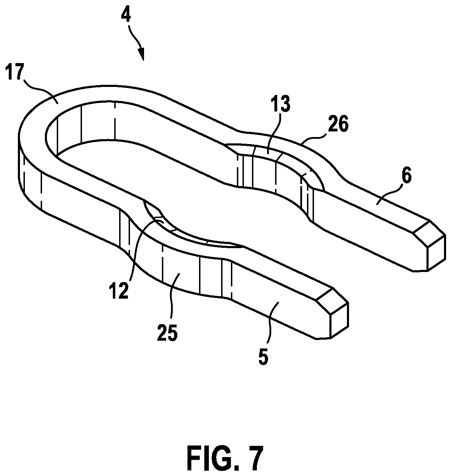

Fig. 7 zeigt das Halteelement 4 der in Fig. 6 dargestellten Anordnung in einer schematischen, räumlichen Darstellung entsprechend dem alternativen Beispiel. Hierbei weisen die Schenkel 5, 6 Anprägungen 12, 13 auf, die Anlageflächen 12, 13 für den Bund 15 der Anschlusshülse 3 bilden. Außerdem weisen die Schenkel 5, 6 im Bereich der zylindermantelförmigen Außenseite 16 der Anschlusshülse 3 bezüglich der Achse (Längsachse) 10 der Tasse 2 beziehungsweise der Anschlusshülse 3 des Brennstoffeinspritzventils nach außen gebogene Fixierabschnitte 25, 26 auf. Die zylindermantelförmige Außenseite 16 dient in diesem alternativen Beispiel als mögliche Kontaktfläche für die Fixierabschnitte 25, 26 der Schenkel 5, 6. Die Fixierabschnitte 25, 26 der Schenkel 5, 6 haben einen geringen radialen Abstand zur zylindermantelförmigen Außenseite 16 der Anschlusshülse 3 des Brennstoffeinspritzventils. Dadurch ist ein Formschluss gebildet, der ein Herausfallen des Halteelements 4 aus der Tasse 2 im montierten Zustand zuverlässig verhindert.

Die anhand der Fig. 6 und 7 beschriebene Anordnung 1 entsprechend dem alternativen Beispiel hat den Vorteil, dass besonders große Auflageflächen zwischen dem Halteelement 4 und der Anschlusshülse 3 ermöglicht sind. Außerdem ergibt sich eine stabile Geometrie, die höhere Drücke ermöglicht.

## Patentansprüche

1. Hochdruckbrennstoffeinspritzanlage (1) für Brennkraftmaschinen mit einem Brennstoffverteiler und mehreren Brennstoffeinspritzventilen, wobei jedes der Brennstoffeinspritzventile an einer Tasse (2) des Brennstoffverteilers angeordnet ist und wobei zumindest eines der Brennstoffeinspritzventile durch ein Halteelement (4) an der zugeordneten Tasse (2) befestigt ist,
wobei das Halteelement (4) einen zumindest im Wesentlichen geraden ersten Schenkel (5) und einen zumindest im Wesentlichen geraden zweiten Schenkel (6) aufweist, dass die Tasse (2) zumindest eine Aussparung (7, 8) aufweist, die sich durch eine Wand (9) der Tasse (2) erstreckt, dass der erste Schenkel (5) und der zweite Schenkel (6) zumindest teilweise durch die zumindest eine Aussparung (7, 8) geführt sind und dass eine Anschlusshülse (3) des Brennstoffeinspritzventils einen Bund (15) aufweist, der zum Befestigen des Brennstoffeinspritzventils an der Tasse (2) an dem ersten Schenkel (5) des Halteelements (4) und an dem zweiten Schenkel (6) des Halteelements (4) abgestützt ist,
**dadurch gekennzeichnet,**
**dass** zwei Aussparungen (7, 8) in Form von Durchgangsbohrungen ausgestaltet sind, die sich zumindest näherungsweise in einer Ebene, die senkrecht zu einer Achse (10) der Tasse (2) orientiert ist, auf jeweils zwei gegenüberliegenden Seiten der Wand (9) erstrecken, wobei der erste Schenkel (5) und der zweite Schenkel (6) des Halteelements (4) in einem Ausgangszustand nicht parallel zueinander orientiert sind, so dass die Schenkel (5, 6) entweder aufeinander zulaufen oder etwas auseinanderlaufen, weshalb durch ein entsprechendes Aufspreizen beziehungsweise Zusammendrücken der Schenkel (5, 6) ein Einfügen in die parallel zueinander ausgestalteten Durchgangsbohrungen (7, 8) ermöglicht ist und sich im montierten Zustand hierdurch eine Klemmkraft der Schenkel (5, 6) gegenüber der Tasse (2) ergibt und wobei an dem ersten Schenkel (5) des Halteelements (4) eine Anlagefläche (12) ausgestaltet ist, an der der Bund (15) der Anschlusshülse (3) des Brennstoffeinspritzventils an dem ersten Schenkel (5) anliegt und wobei an dem zweiten Schenkel (6) des Halteelements (4) eine Anlagefläche (13) ausgestaltet ist, an der der Bund (15) der Anschlusshülse (3) des Brennstoffeinspritzventils an dem zweiten Schenkel (6) anliegt und wobei die Anlagefläche (12) des ersten Schenkels (5) durch eine Anprägung (12) ausgebildet ist und die Anlagefläche (13) des zweiten Schenkels (6) durch eine Anprägung (13) ausgebildet ist.

2. Hochdruckbrennstoffeinspritzanlage nach Anspruch 1,
**dadurch gekennzeichnet,**
**dass** zwischen dem ersten Schenkel (5) des Halteelements (4) und dem Bund (15) der Anschlusshülse (3) des Brennstoffeinspritzventils ein Formschluss gebildet ist, der das Halteelement (4) relativ zu der Tasse (2) fixiert, und/oder dass zwischen dem zweiten Schenkel (6) des Halteelements (4) und dem Bund (15) der Anschlusshülse (3) des Brennstoffeinspritzventils ein Formschluss gebildet ist, der das Halteelement (4) relativ zu der Tasse (2) fixiert.

3. Hochdruckbrennstoffeinspritzanlage nach Anspruch 1 oder 2,
**dadurch gekennzeichnet,**
**dass** der erste Schenkel (5) des Halteelements (4) ein zumindest näherungsweise rechteckiges Profil aufweist und/oder dass der zweite Schenkel (6) des Halteelements (4) ein zumindest näherungsweise rechteckiges Profil aufweist.

4. Hochdruckbrennstoffeinspritzanlage nach einem der Ansprüche 1 bis 3, **dadurch gekennzeichnet,**
**dass** der erste Schenkel (5) im Bereich der Anschlusshülse (3) des Brennstoffeinspritzventils einen bezüglich einer Längsachse (10) der Tasse (2) radial nach außen gebogenen Fixierabschnitt (25) aufweist und/oder dass der zweite Schenkel (6) im Bereich der Anschlusshülse (3) des Brennstoffeinspritzventils einen bezüglich der Längsachse (10) der Tasse (2) radial nach außen gebogenen Fixierabschnitt (26) aufweist.

5. Hochdruckbrennstoffeinspritzanlage nach Anspruch 4,
**dadurch gekennzeichnet,**
**dass** die Anschlusshülse (3) des Brennstoffeinspritzventils eine zumindest teilweise zylindermantelförmige Kontaktfläche (16) aufweist und dass der Fixierabschnitt (25) des ersten Schenkels (5) beziehungsweise der Fixierabschnitt (26) des zweiten Schenkels (6) an der Kontaktfläche (16) der Anschlusshülse (3) einen geringen radialen Abstand hat.

6. Hochdruckbrennstoffeinspritzanlage nach einem der Ansprüche 1 bis 5, **dadurch gekennzeichnet,**
**dass** das Halteelement (4) einen Bügel (17) aufweist, der den ersten Schenkel (5) mit dem zweiten Schenkel (6) verbindet, und dass an dem Bügel (17) ein Anschlag (19) vorgesehen ist, der an einer Außenseite (20) der Tasse (2) anschlägt.

7. Hochdruckbrennstoffeinspritzanlage nach Anspruch 6,
**dadurch gekennzeichnet,**
**dass** der Anschlag (19) des Bügels (17) durch einen umgebogenen Teil (21) des Bügels (17) gebildet ist.

8. Hochdruckbrennstoffeinspritzanlage nach Anspruch 6,
**dadurch gekennzeichnet,**
**dass** der Anschlag (19) des Bügels (17) durch ein mit dem Bügel (17) verbundenes Anschlagteil (18) gebildet ist.

## Claims

1. High-pressure fuel injection system (1) for internal combustion engines, having a fuel distributor and multiple fuel injection valves, wherein each of the fuel injection valves is arranged at a cup (2) of the fuel distributor and wherein at least one of the fuel injection valves is fastened by means of a retaining element (4) to the associated cup (2),
wherein the retaining element (4) has an at least substantially straight first limb (5) and an at least substantially straight second limb (6), wherein the cup (2) has at least one aperture (7, 8) which extends through a wall (9) of the cup (2), wherein the first limb (5) and the second limb (6) are led at least partially through the at least one aperture (7, 8), and wherein a connection sleeve (3) of the fuel injection valve has a collar (15) which, for the fastening of the fuel injection valve to the cup (2), is supported on the first limb (5) of the retaining element (4) and on the second limb (6) of the retaining element (4),
**characterized**
**in that** two apertures (7, 8) are formed in the manner of passage bores which extend at least approximately in a plane, which is oriented perpendicular to an axis (10) of the cup (2), on in each case two opposite sides of the wall (9), wherein the first limb (5) and the second limb (6) of the retaining element (4) are, in an initial state, oriented non-parallel with respect to one another such that the limbs (5, 6) either converge on one another or diverge somewhat, whereby, by virtue of the limbs (5, 6) being correspondingly spread apart or pushed together, respectively, insertion into the passage bores (7, 8) formed parallel to one another is made possible, and a clamping force of the limbs (5, 6) with respect to the cup (2) arises as a result in the installed state, and wherein, on the first limb (5) of the retaining element (4), there is formed an abutment surface (12) at which the collar (15) of the connection sleeve (3) of the fuel injection valve lies against the first limb (5), and wherein, on the second limb (6) of the retaining element (4), there is formed an abutment surface (13) at which the collar (15) of the connection sleeve (3) of the fuel injection valve lies against the second limb (6), and wherein the abutment surface (12) of the first limb (5) is formed by an embossment (12) and the abutment surface (13) of the second limb (6) is formed by an embossment (13) .

2. High-pressure fuel injection system according to Claim 1,
**characterized**
**in that** a form fit which fixes the retaining element (4) relative to the cup (2) is formed between the first limb (5) of the retaining element (4) and the collar (15) of the connection sleeve (3) of the fuel injection valve, and/or in that a form fit which fixes the retaining element (4) relative to the cup (2) is formed between the second limb (6) of the retaining element (4) and the collar (15) of the connection sleeve (3) of the fuel injection valve.

3. High-pressure fuel injection system according to Claim 1 or 2,
**characterized**
**in that** the first limb (5) of the retaining element (4) has an at least approximately rectangular profile, and/or in that the second limb (6) of the retaining element (4) has an at least approximately rectangular profile.

4. High-pressure fuel injection system according to any one of Claims 1 to 3,
**characterized**
**in that** the first limb (5) has, in the region of the connection sleeve (3) of the fuel injection valve, a fixing section (25) which is bent radially outwardly with respect to a longitudinal axis (10) of the cup (2), and/or in that the second limb (6) has, in the region of the connection sleeve (3) of the fuel injection valve, a fixing section (26) which is bent radially outwardly with respect to the longitudinal axis (10) of the cup (2).

5. High-pressure fuel injection system according to Claim 4,
**characterized**
**in that** the connection sleeve (3) of the fuel injection valve has an at least partially cylinder-shell-shaped contact surface (16), and in that the fixing section (25) of the first limb (5) and the fixing section (26) of the second limb (6), respectively, has a small radial spacing at the contact surface (16) of the connection sleeve (3).

6. High-pressure fuel injection system according to any one of Claims 1 to 5,
**characterized**
**in that** the retaining element (4) has a bow (17) which connects the first limb (5) to the second limb (6), and in that, on the bow (17), there is provided a stop (19) which abuts against an outer side (20) of the cup (2).

7. High-pressure fuel injection system according to Claim 6,
**characterized**
**in that** the stop (19) of the bow (17) is formed by a bent part (21) of the bow (17).

8. High-pressure fuel injection system according to Claim 6,
**characterized**
**in that** the stop (19) of the bow (17) is formed by a stop part (18) which is connected to the bow (17).

## Revendications

1. Installation d'injection de carburant haute pression (1) pour moteurs à combustion interne comportant un répartiteur de carburant et plusieurs soupapes d'injection de carburant, chacune des soupapes d'injection de carburant étant disposée au niveau d'une coupelle (2) du répartiteur de carburant et au moins l'une des soupapes d'injection de carburant étant fixée à la coupelle (2) associée au moyen d'un élément de retenue (4),
l'élément de retenue (4) comprenant une première branche (5) au moins sensiblement rectiligne et une deuxième branche (6) au moins sensiblement rectiligne, la coupelle (2) comprenant au moins un évidement (7, 8) qui s'étend à travers une paroi (9) de la coupelle (2), la première branche (5) et la deuxième branche (6) étant guidées au moins partiellement à travers l'au moins un évidement (7, 8) et une douille de raccordement (3) de la soupape d'injection de carburant comprenant un collet (15) qui, pour la fixation de la soupape d'injection de carburant à la coupelle (2), est supporté sur la première branche (5) de l'élément de retenue (4) et sur la deuxième branche (6) de l'élément de retenue (4),
**caractérisée en ce que**
deux évidements (7, 8) sont configurés sous la forme d'alésages traversants qui s'étendent sur respectivement deux côtés opposés de la paroi (9) au moins approximativement dans un plan qui est orienté perpendiculairement à un axe (10) de la coupelle (2), la première branche (5) et la deuxième branche (6) de l'élément de retenue (4) n'étant pas orientées parallèlement l'une à l'autre dans un état initial, de sorte que les branches (5, 6) soit convergent soit divergent, c'est pourquoi, par un écartement respectivement une compression correspondant(e) des branches (5, 6), une insertion dans les alésages traversants (7, 8) configurés parallèlement l'un à l'autre est rendue possible et une force de serrage des branches (5, 6) par rapport à la coupelle (2) est donc produite à l'état monté, et une surface d'appui (12) étant configurée sur la première branche (5) de l'élément de retenue (4), surface d'appui sur laquelle le collet (15) de la douille de raccordement (3) de la soupape d'injection de carburant s'appuie contre la première branche (5), et une surface d'appui (13) étant configurée sur la deuxième branche (6) de l'élément de retenue (4), surface d'appui sur laquelle le collet (15) de la douille de raccordement (3) de la soupape d'injection de carburant s'appuie contre la deuxième branche (6), et la surface d'appui (12) de la première branche (5) étant formée par une empreinte (12) et la surface d'appui (13) de la deuxième branche (6) étant formée par une empreinte (13).

2. Installation d'injection de carburant haute pression selon la revendication 1,
**caractérisée en ce**
**qu'**une complémentarité de forme est formée entre la première branche (5) de l'élément de retenue (4) et le collet (15) de la douille de raccordement (3) de la soupape d'injection de carburant, laquelle complémentarité de forme fixe l'élément de retenue (4) par rapport à la coupelle (2), et/ou **en ce qu'**une complémentarité de forme est formée entre la deuxième branche (6) de l'élément de retenue (4) et le collet (15) de la douille de raccordement (3) de la soupape d'injection de carburant, laquelle complémentarité de forme fixe l'élément de retenue (4) par rapport à la coupelle (2).

3. Installation d'injection de carburant haute pression selon la revendication 1 ou 2,
**caractérisée en ce que**
la première branche (5) de l'élément de retenue (4) présente un profil au moins approximativement rectangulaire et/ou **en ce que** la deuxième branche (6) de l'élément de retenue (4) présente un profil au moins approximativement rectangulaire.

4. Installation d'injection de carburant haute pression selon l'une des revendications 1 à 3, **caractérisée en ce que**
la première branche (5) comprend dans la région de la douille de raccordement (3) de la soupape d'injection de carburant une partie de fixation (25) courbée radialement vers l'extérieur par rapport à un axe longitudinal (10) de la coupelle (2) et/ou **en ce que** la deuxième branche (6) comprend dans la région de la douille de raccordement (3) de la soupape d'injection de carburant une partie de fixation (26) courbée radialement vers l'extérieur par rapport à l'axe longitudinal (10) de la coupelle (2).

5. Installation d'injection de carburant haute pression selon la revendication 4,
**caractérisée en ce que**
la douille de raccordement (3) de la soupape d'injection de carburant comprend une surface de contact (16) au moins partiellement en forme d'enveloppe cylindrique et **en ce que** la partie de fixation (25) de la première branche (5) respectivement la partie de fixation (26) de la deuxième branche (6) présente une distance radiale faible au niveau de la surface de contact (16) de la douille de raccordement (3).

6. Installation d'injection de carburant haute pression selon l'une des revendications 1 à 5, **caractérisée en ce que**
l'élément de retenue (4) comporte un étrier (17) qui relie la première branche (5) à la deuxième branche (6), et **en ce qu'**une butée (19) est prévue sur l'étrier (17), laquelle vient en butée contre un côté extérieur (20) de la coupelle (2).

7. Installation d'injection de carburant haute pression selon la revendication 6,
**caractérisée en ce que**
la butée (19) de l'étrier (17) est formée par une partie recourbée (21) de l'étrier (17).

8. Installation d'injection de carburant haute pression selon la revendication 6,
**caractérisée en ce que**
la butée (19) de l'étrier (17) est formée par une partie de butée (18) reliée à l'étrier (17).
